# EUROPÄISCHE PATENTSCHRIFT

(11) **EP 2 547 469 B1**
(45) Veröffentlichungstag und Bekanntmachung des Hinweises auf die Patenterteilung: **23.04.2014**
(21) Anmeldenummer: 11712198.8
(22) Anmeldetag: 18.03.2011
(51) Int. Cl.: B21D 39/02, B21D 19/04, B21D 53/88

(54) **FALZEINRICHTUNG UND FALZVERFAHREN**
FOLDING DEVICE AND FOLDING METHOD
DISPOSITIF ET PROCÉDÉ DE PLIAGE

(30) Priorität: 19.03.2010 DE 202010000426 U
(43) Veröffentlichungstag der Anmeldung: 23.01.2013
(73) Patentinhaber: KUKA Systems GmbH, 86165 Augsburg (DE)
(72) Erfinder: KRAUS, Johann, 86690 Mertingen (DE); FISCHER, Wolfgang, 86199 Augsburg (DE)
(74) Vertreter: Ernicke, Klaus Stefan
(86) Internationale Anmeldenummer: PCT/EP2011/054111
(87) Internationale Veröffentlichungsnummer: WO 2011/113928

(56) Entgegenhaltungen:
- EP-A2- 0 978 334
- DE-A1-102007 024 777
- JP-A- 9 038 733
- JP-U- H0 464 424
- US-A1- 2009 089 995

## Beschreibung

Die Erfindung betrifft eine Falzeinrichtung mit den Merkmalen im Oberbegriff des Hauptanspruchs.

Aus der DE 10 2007 024 777 A1 ist eine Rollenfalzvorrichtung bekannt, die ein liegendes Falzbett mit seitlich angeordneten Falzrobotern aufweist, die gemeinsam mit Rollenfalzköpfen die Flansche des Werkstücks falzen, wobei das Falzbett sich zusätzlich mittels einer eigenen Rotationsachse dreht. Die Falzroboter falzen äußere Flansche des Werkstücks und greifen beide an dessen Vorderseite an. US 2009/0089995 A1 offenbart eine Falz-einrichtung mit einem Falzbett, welches auf einem Drehtisch angeordnet ist.

Wenn ein Werkstück, z.B. eine Fahrzeugtüre, innere und äußere Flansche bzw. Falze aufweist, die von verschiedenen Hauptseiten des Werkstücks, insbesondere von dessen Vorder- und Rückseite, her zugänglich sind und gefalzt werden, findet in der Praxis ein Stationswechsel statt, wobei das Werkstück nach dem Falzen der einen, z.B. äußeren Flansche, aufgenommen und zu einer nächsten Falzeinrichtung transportiert wird, um dort die anderen, z.B. inneren Flansche, zu falzen.

Es ist Aufgabe der vorliegenden Erfindung, eine bessere und leistungsfähigere Falztechnik aufzuzeigen.

Die Erfindung löst diese Aufgabe mit den Merkmalen der Vorrichtungsanspruchs 1 und des Verfahrenanspruchs 11. Die beanspruchte Falztechnik, insbesondere die Falzeinrichtung hat eine höhere Leistungsfähigkeit und eine bessere Wirtschaftlichkeit. In der Falzeinrichtung können sowohl innere, als auch äußere Flansche gefalzt werden, was am selben Falzbett und insbesondere auch zu gleicher Zeit geschehen kann. Die z.B. an Vorder- und Rückseite des Falzbetts angeordneten Falzroboter stören sich dabei nicht gegenseitig. Die Prozesszeiten für die inneren und äußeren Flansche können einander überlagert werden, wobei auch die bisher beim falzbedingten Stationswechsel erforderliche Rüst- und Transportzeit entfällt. Die beanspruchte Falztechnik ist schneller als der Stand der Technik und braucht weniger Logistikaufwand sowie weniger Platz.

Die Falzprozesse können durch Rollfalzen mit den Falzrobotern durchgeführt werden. Sofern zusätzliche Eckenfalzvorgänge erforderlich sein sollten, können diese ebenfalls implementiert werden, ohne dass ein Umspannen oder ein Falzbettwechsel erforderlich sind.

Die Falzeinrichtung ist in ihrer Kapazität mittels einer Fördereinrichtung erweitert. Sie gestattet es, gleiche und auch unterschiedliche Werkstücke in der gleichen Einrichtung zu falzen. Für den bevorzugten Anwendungsbereich von Karosseriebauteilen im Rohbau, insbesondere Türen, Klappen oder dgl., können Falzprozesse konzentriert und besser lokalisiert werden. Insbesondere können in der gleichen Falzeinrichtung mehrere unterschiedliche Werkstücke, insbesondere Türen, des gleichen Fahrzeugs gefalzt werden. Dies können z.B. zwei oder vier Seitentüren und ggf. eine Heckklappe sein. Alternativ ist es möglich, mehrere gleiche Werkstücke in der Falzeinrichtung zu bearbeiten. In Verbindung mit einer Fördereinrichtung, die mehrere Arbeitsstellen aufweist, können Rüst- und Falzvorgänge in verschiedenen Takten und mit Weitertransport des Falzbetts stattfinden. Die Falzeinrichtung bietet eine optimale Flexibilität, insbesondere auch durch einen Falzbettwechsel und lässt sich schnell und einfach auf unterschiedlichste Falzaufgaben anpassen.

Beim Falzen von Werkstücken mit einem Fensterausschnitt, z.B. Türen oder Klappen einer Fahrzeugkarosserie, kann zusätzlich zu den Falzrobotern eine Innenfalzeinrichtung eingesetzt werden, welche den oder die am Ausschnittsrand befindlichen Falze bildet. Die Innenfalzeinrichtung kann bei Bedarf am Falzbett oder an der Stützeinrichtung angebaut oder wieder entfernt werden, wobei sich eine modulare Ausbildung empfiehlt. Das Falzbett kann insgesamt in Segmente aufgeteilt und modular ausgebildet sein, wodurch es an unterschiedliche Werkstückformen leicht und schnell angepasst werden kann, die sich nur in teilweisen Formmerkmalen unterscheiden.

Zum Bearbeiten von Werkstücken mit einem Fensterausschnitt kann das Falzbett ein Innenfalzbett für den Ausschnittsbereich aufweisen. Dieses kann zumindest bereichsweise deaktiviert werden, was z.B. durch ein Absenken geschehen kann. Eine solche Ausbildung erlaubt die Bearbeitung gleichartiger Werkstücke mit unterschiedlichen Bearbeitungsanforderungen im Fensterausschnittsbereich. Dies kann z.B. bei Fahrzeugtüren der Fall sein, die Scheiben mit Fensterhebern aufweisen und daher eine Falzung an den Fensterausschnittsrändern brauchen, wobei andere Bauformen der äußerlich im wesentlichen gleichen Türe fest eingesetzte Scheiben oder einen massiven und nicht ausgeschnittenen Fensterbereich aufweisen und keine Falzbearbeitung verlangen. Eine Deaktivierung beseitigt für derartige Werkstückvarianten die Störkontur des Innenfalzbettes.

Für die Genauigkeit und Reproduzierbarkeit der Falzprozesse ist es günstig, eine definierte Schnittstelle für die exakte und reproduzierbare Positionierung eines Falzbettes auf einem stationären oder mobilen Unterbau vorzusehen. Hierdurch wird auch die Werkstückposition exakt definiert. Dies ist insbesondere bei austauschbaren Falzbetten von Vorteil.

Zur Steigerung der Prozessqualität ist es günstig, die gesamte Falzeinrichtung exakt zu vermessen und zu kalibrieren. Dies betrifft insbesondere die Lage und Ausbildung der Einrichtungskomponenten im Raum und relativ zueinander. Die betroffenen Einrichtungskomponenten können das oder die Falzbetten, die ggf. vorhandene Schnittstelle(n), ein evtl. vorhandener Förderer, ein oder mehrere Falzwerkzeuge und die verschiedenen Roboter zur Bearbeitung und Handhabung der Werkstücke und ggf. der Falzbetten sein. Die verschiedenen Roboter sind mit absoluter Genauigkeit vermessen und kalibriert, ggf. zusammen mit einem Toleranzausgleich unter Berücksichtigung von Form und Gestalt des Falzwerkzeugs.

Eine hohe Vermessungs- und Prozessgenauigkeit ist auch für eine Minimierung des Rüstaufwands von Vorteil. Bei der Fertigung von Fahrzeugkarosserien werden zunächst Pilotstationen zur Voreinrichtung der Fertigung aufgebaut, getestet und optimiert. Anschließend werden sie in die Serienfertigung integriert. Nach Auslaufen der Serienfertigung bedarf es noch über einen längeren Zeitraum der Fertigung und Nachlieferung von Ersatzteilen. Hierfür wird eine gesonderte Falzstation benötigt. Bei einem Modellwechsel eines Fahrzeugs müssen die Abläufe miteinander abgestimmt und verschmolzen werden. Die Pilotphase und die Einrichtung einer Pilot-Falzstation beginnt während der auslaufenden Serienfertigung des alten Modells. Der Modellwechsel und der Umbau der Serienfertigung für das neue Modell müssen dann sehr schnell gehen. Andererseits bedarf es nach Serienende in einer separaten Falzstation der Ersatzteilfertigung. Mit der beanspruchten Falztechnik können diese Umrüstungen sehr schnell und exakt durchgeführt werden. Für die Ersatzteilfertigung ergibt sich eine erhöhte Flexibilität, wobei in einer Falzstation dank der variablen Falzbetten verschiedene Werkstücke, insbesondere Karosserieteile, bedarfsweise und im Wechsel gefertigt werden können und durch die Flexibilität der Stations- und Bauaufwand niedrig gehalten werden kann. Günstig ist hierbei der Einsatz einer Steuerung mit einem Bearbeitungsprogramm, welches an die exakt vermessene und kalibrierte Lage, Ausbildung und ggf. Kinematik der Komponenten der Falzeinrichtung adaptiert ist. Bei einem Werkstückwechsel oder einer Umrüstung einer Pilotstation für den Serienbetrieb bedarf es nur noch eines geringen Umrüstaufwands. Mit einer Vermessungseinrichtung kann die gesamte Konfiguration der Falzeinrichtung bzw. Falzstation und ihrer Komponenten erfasst und eingemessen werden, wobei das vorhandene Bearbeitungsprogramm weiter benutzt und nur hinsichtlich der Einmessergebnisse angepasst wird. Eine völlige Neueinrichtung einer Falzstation ist nicht mehr erforderlich. Es können erheblich Zeit und Kosten gespart werden. Die flexible Falzstation für die Ersatzteilfertigung kann optimal ausgelastet werden, wobei der bisherige Aufwand für mehrfache Ersatzteil-Falzstationen deutlich verringert werden kann.

Die Vermessung der Falzeinrichtung bzw. Falzstation und deren Komponenten kann mit einer stationären Vermessungseinrichtung durchgeführt werden. Dies erlaubt auch eine Vermessung zu Kontroll- und Kalibrierzwecken während der laufenden Fertigung und ermöglicht damit eine dauerhafte Qualitätskontrolle. Mit der Vermessungseinrichtung können vorteilhafterweise alle relevanten Komponenten der Falzeinrichtung bzw. Falzstation erfasst und vermessen werden. Hierbei kann das Einmessen auf einen für alle Komponenten gemeinsamen Bezugspunkt erfolgen, der z.B. der Fußpunkt des Werkstück-Koordinatensystems sein kann. Eine Nachvermessung oder eine Neuvermessung bei einem Werkstück- oder Komponentenwechsel erfolgt wieder über die gleiche Vermessungseinrichtung und kann auf den gleichen Bezugspunkt bezogen sein. Die dabei evtl. festgestellten Messabweichungen können als Offset für die jeweilige Komponente in das Bearbeitungsprogramm übernommen werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Draufsicht auf eine Falzeinrichtung zum beidseitigen Falzen von Werkstücken,
- Figur 2:: eine abgebrochene Seitenansicht der Falzeinrichtung mit einem Falzbett und angedeuteten Falzrobotern gemäß Pfeil II von Figur 1,

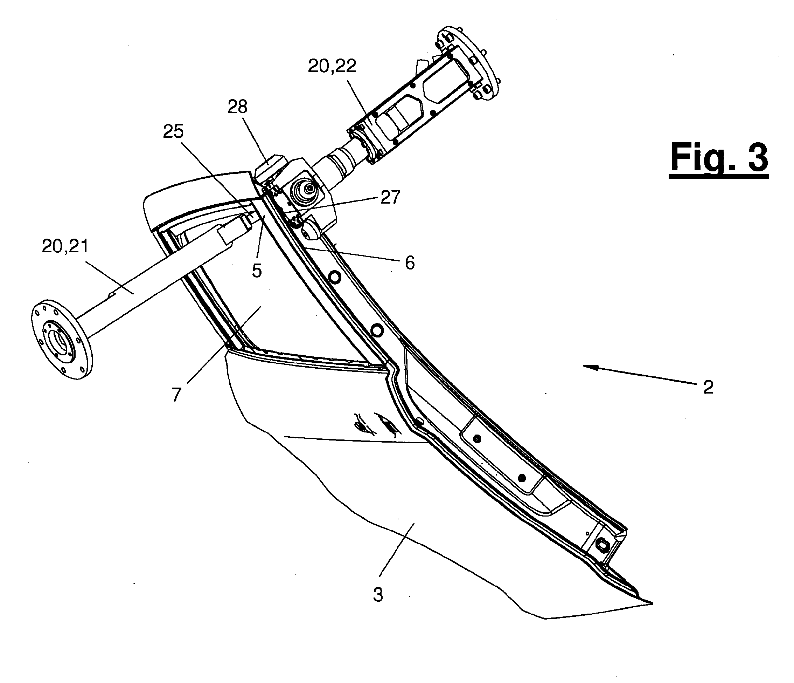

- Figur 3:: eine perspektivische Ansicht der Falzsituation zu Figur 2 ohne Falzbett,
- Figur 4:: eine abgebrochene Schnittdarstellung des Werkstücks mit einem inneren und äußeren Flansch, einem Falzbett und zwei Rollenfalzköpfen,
- Figur 5:: eine abgebrochene und vergrößerte Detaildarstellung des Falzbereichs,
- Figur 6 und 7:: eine perspektivische Ansicht und eine Seitenansicht eines Rollenfalzkopfes,
- Figur 8:: eine perspektivische Ansicht eines anderen Rollenfalzkopfes,
- Figur 9:: eine Draufsicht auf eine Seitentüre eines Fahrzeugs,
- Figur 10 bis 13:: Anordnungsvarianten der Falzeinrichtung, wobei Figur 12 eine nicht erfindungsgemäße Variante darstellt
- Figur 14:: eine abgebrochene Seitenansicht der Falzeinrichtung mit einer Vermessungseinrichtung und einer Schnittstelle für die definierte Falzbettpositionierung,
- Figur 15:: eine perspektivische Ansicht eines Falzbetts mit einem absenkbaren Innenfalzbett,
- Figur 16:: eine Draufsicht auf eine Türe mit Fensterausschnitt auf einem Falzbett,
- Figur 17:: einen abgebrochenen Schnitt durch das Falzbett mit angehobenen Innenfalzbett gemäß Schnittlinie VII - VII von Figur 16 und
- Figur 18:: eine Schnittdarstellung gemäß Figur 17 mit abgesenktem Innenfalzbett.

Die Erfindung betrifft eine Falzeinrichtung (2) zum Falzen von ein oder mehreren Werkstücken (3). Die Erfindung betrifft ferne eine mit einer solchen Falzeinrichtung (2) ausgerüstete Falzstation (1) sowie ein Falzverfahren.

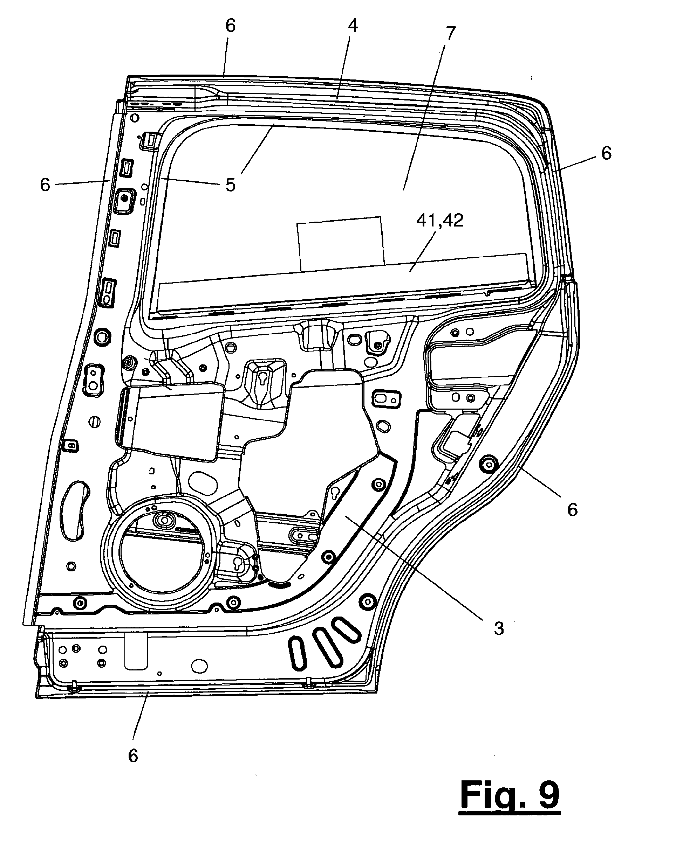

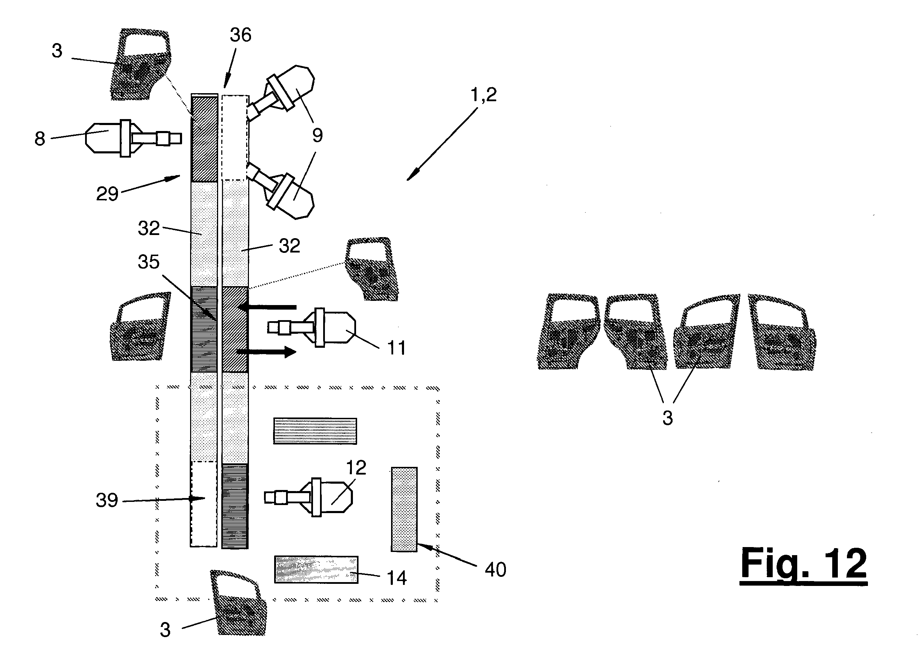

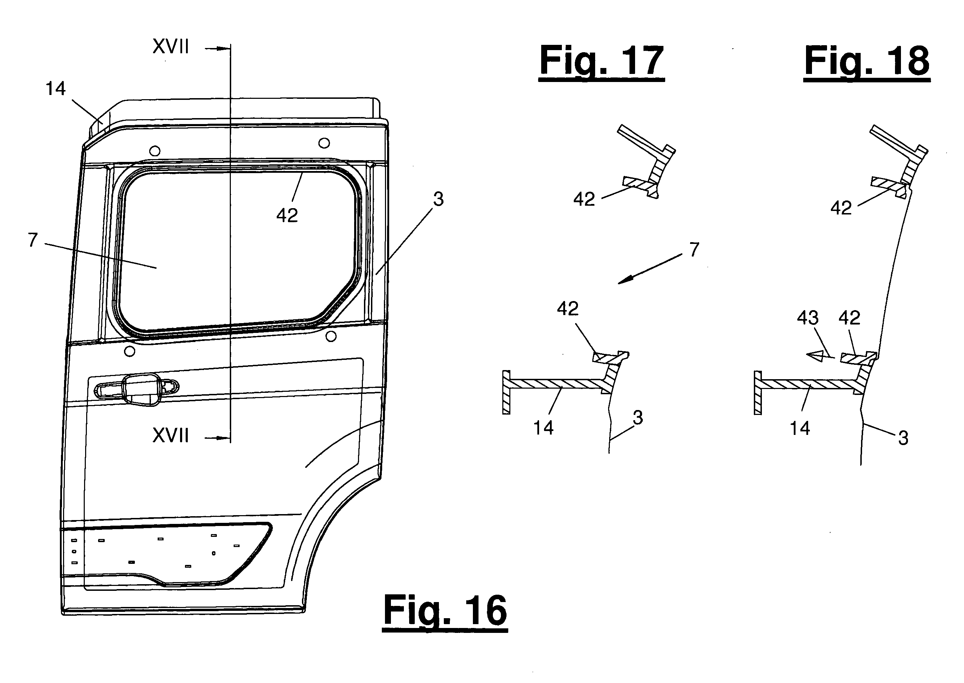

Das Werkstück (3) kann von beliebiger Art und Ausbildung sein. Vorzugsweise handelt es sich um ein Karosseriebauteil aus metallischen Blechen, die z.B. aus Stahl, Leichtmetall oder dgl. bestehen. Das Werkstück (3) kann insbesondere eine Seitentüre einer Rohkarosserie eines Kraftfahrzeugs sein, wie sie beispielhaft in Figur 9 und 16 dargestellt ist. Eine solche Seitentüre kann einen Fensterausschnitt (7) haben. Die gezeigte Türe (3) kann in ihrer Ausbildung als linke und rechte Seitentüre und ggf. als Vorder- und Hintertüre gemäß Figur 12 variieren. In weiterer Abwandlung kann es sich um eine Heckklappe mit einem Fensterausschnitt handeln. Ferner kann das Werkstück (3) ein Dachblech mit einem Dachausschnitt sein. Es sind weitere Varianten in Form von Hauben, Klappen, Deckeln oder dgl. möglich.

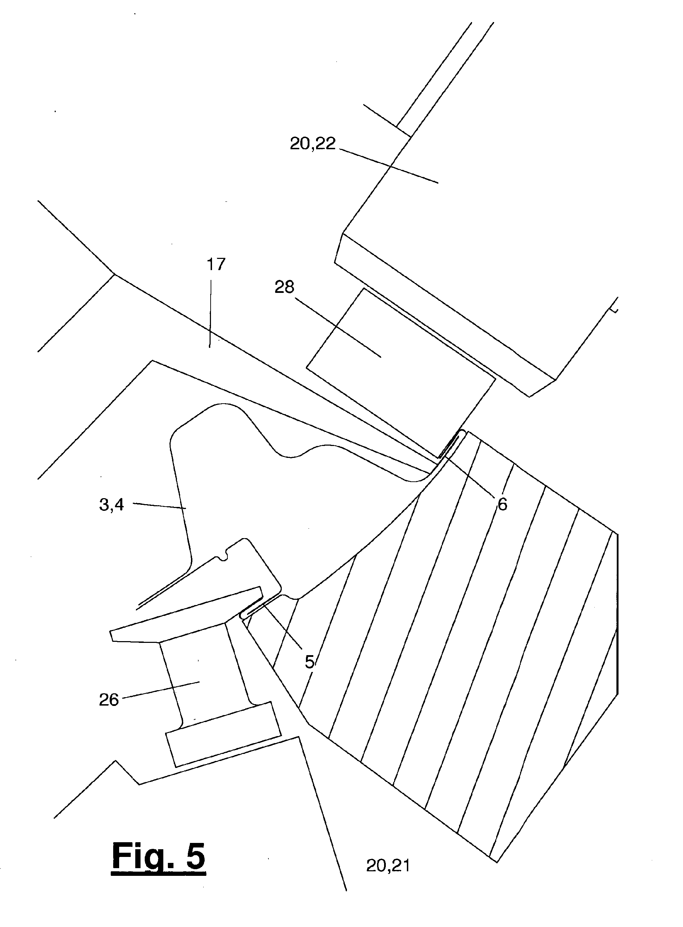

Das Werkstück (3) hat innere und äußere Falze (5,6), die von unterschiedlichen und z.B. einander gegenüber liegenden Werkstückseiten zum Falzen zugänglich sind, wie dies beispielhaft in Figur 5 dargestellt ist. Dies können die Hauptseiten des Werkstücks (3), insbesondere die Vorderseite und die Rückseite, sein und können sich auf eine Hauptebene des Werkstücks (3) beziehen. Die inneren und äußeren Falze (5,6) können sich auch an verschiedenen Werkstückseiten befinden.

Figur 5 zeigt einen Querschnitt durch ein hohles Werkstückprofil (4), insbesondere einen Holm im Bereich des Fensterausschnitts (7). Der äußere Falz (6) befindet sich an der Holmaußenseite und kann sich in einen außenseitig an der Türenkontur umlaufenden Außenfalz fortsetzen, wie er in Figur 9 angedeutet ist. Der innere Falz (5) befindet sich z.B. am Rand des Fensterausschnitts (7) und ist zu dessen Innenraum gerichtet. Er befindet sich z.B. am Rand einer Profilöffnung, die an der eingebauten Türe später zur Aufnahme der Fensterscheibe dient. Wie Figur 5 verdeutlicht, weisen die Falze (5,6) nach entgegengesetzten Richtungen. Sie können daher nicht mit dem gleichen Werkzeug und von der gleichen Seite her in einer Aufspannung gefalzt bzw. gebördelt werden.

In den Zeichnungen sind die bereits umgebogenen und fertigen Falze (5,6) dargestellt. Sie werden aus anfänglich abstehenden Flanschen der Außen- und Innenbleche gebildet und in ein oder mehreren Falzschritten umgebogen zu der in Figur 5 gezeigten Falzlage. Die Zahl der Falzschritte hängt von der ursprünglichen Flanschausrichtung und dem insgesamt beim Falzen bzw. Bördeln vorzunehmenden Biegewinkel ab. In der gezeigten Ausführungsform haben z.B. die Flansche ursprünglich einen Öffnungswinkel von ca. 90° und werden in zwei Falzschritten zu der in Figur 5 gezeigten Falzlage umgebogen. In scharfen Eckbereichen oder im Bereich von charakteristischen Knicklinien an der Türenaußenseite können zusätzliche Falzmaßnahmen mittels Eckenfalzung, Knickfalzung, Nachdrücken oder dgl. ergriffen werden.

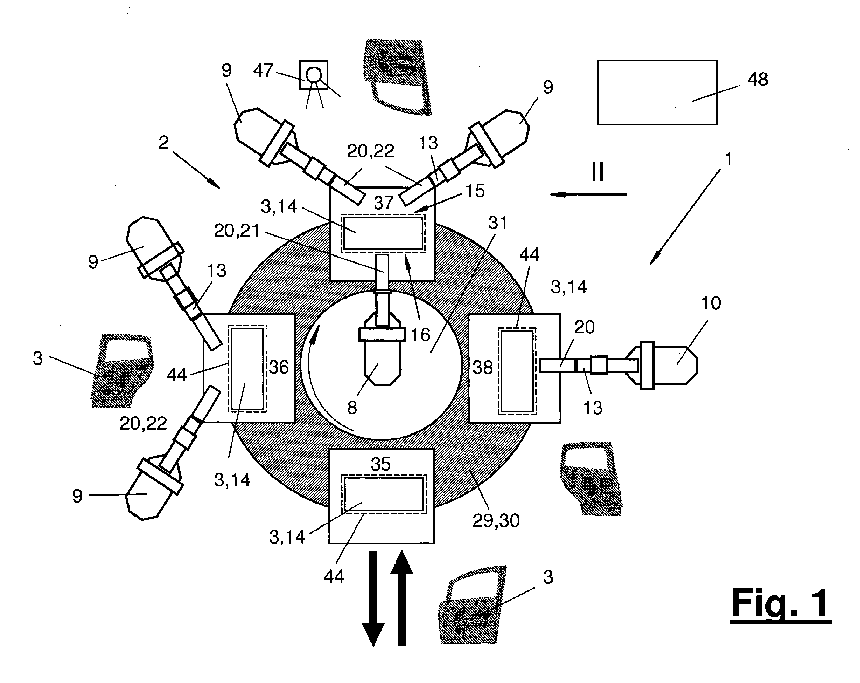

Figur 1 zeigt eine erste schematische Variante der Falzeinrichtung (2). Sie ist zum beidseitigen Falzen von inneren und äußeren Falzen (5,6) ausgebildet, wobei diese Falzvorgänge in der gleichen Werkstückaufspannung durchgeführt werden können. Außerdem können die Falzvorgänge einander zeitlich überlappen oder auch gleichzeitig ausgeführt werden. Figur 1 zeigt eine Vermessungseinrichtung (47) und eine Steuerung (48), auf die später noch eingegangen wird.

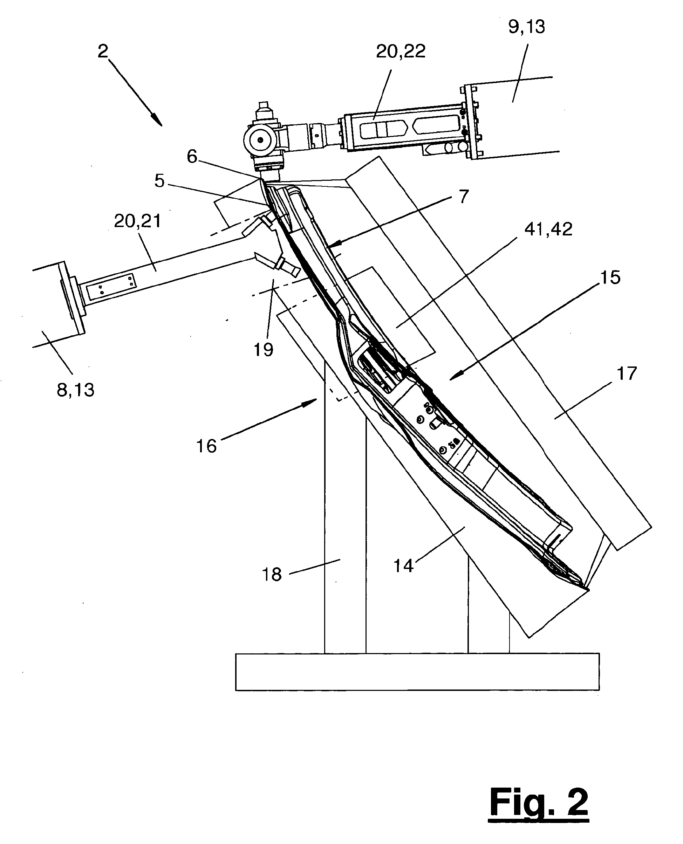

Die Falzeinrichtung (2) weist ein oder mehrere Falzbetten (14) für jeweils ein oder mehrere Werkstücke (3) auf und besitzt mehrere Falzroboter (8,9), die an verschiedenen Seiten des Falzbetts (14) angeordnet sind. Sie können insbesondere an einander gegenüber liegenden Seiten, z.B. an der Vorder- und Rückseite (15,16) des Falzbetts (14) angeordnet sein. Figur 2 zeigt diese Falzbettanordnung und die Roboterzuordnung. Die Falzroboter (8,9) führen Falzprozesse an den inneren und äußeren Falzen (5,6) und an unterschiedlichen Werkstückseiten, insbesondere an Vorder- und Rückseite durch. Sie können hierfür alternativ anders angeordnet sein, z.B. vor und neben dem Falzbett (14), und entsprechende Bewegungen ausführen.

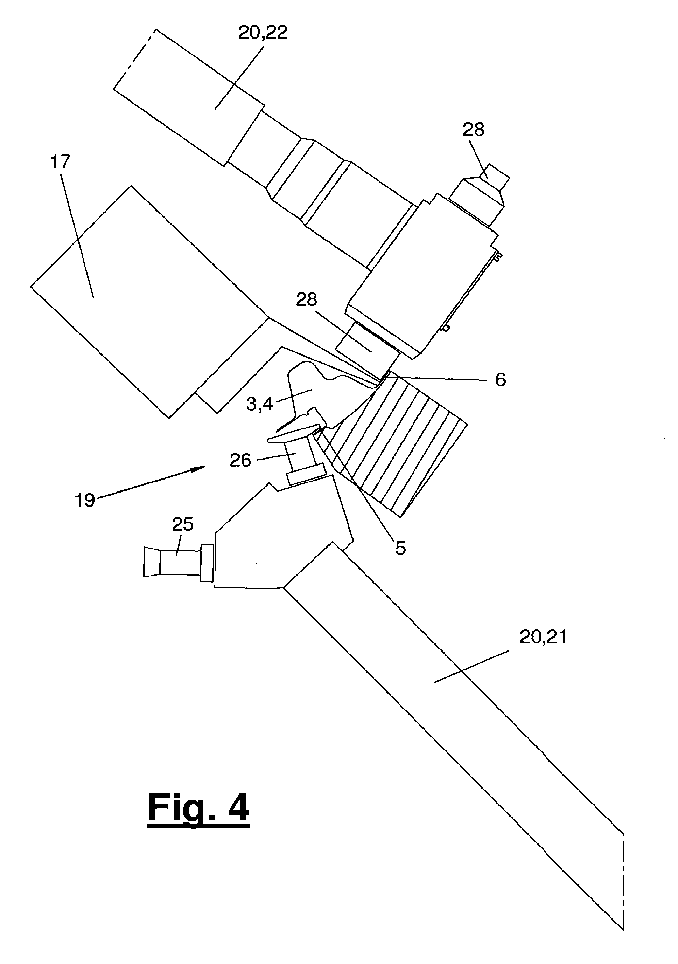

Das Falzbett (14) ist für einen beidseitigen Zugang zu den inneren und äußeren Falzen (5,6) am Werkstück (3) ausgebildet und hat eine entsprechend geeignete Anordnung. Das Werkstück (3) liegt an der Vorderseite (15) des Falzbetts (14) auf und wird dort zumindest im Falzbereich abgestützt. Hierbei kann eine Abstützung und Bettung für die inneren und die äußeren Falze (5,6) vorliegen, wie dies in Figur 4 und 5 dargestellt ist.

Der äußere Falz (6) ist von der Vorderseite (15) her für einen äußeren Falzroboter (9) zugänglich, der z.B. vor oder neben dem Falzbett (14) steht. Das Falzbett (14) kann eine Spanneinrichtung (17) aufweisen, die z.B. an der Vorderseite (15) angeordnet ist und die in Figur 2, 4 und 5 dargestellt ist. Die Spanneinrichtung (17) kann beweglich und steuerbar sein. Sie kann Einzelspanner und/oder einen Spannrahmen aufweisen.

Für den zur Rückseite (16) weisenden inneren Falz (5) hat das Falzbett (14) einen Ausschnitt (19), der bei der in Figur 2 und 9 gezeigten Türe im Bereich des Fensterausschnitts (7) angeordnet ist und der je nach Werkstückgestaltung auch mehrfach vorhanden sowie an anderer Stelle angeordnet sein kann. Durch den Ausschnitt (19) ist der innere Falz (5) von der Rückseite (16) her für einen inneren oder rückseitigen bzw. seitlichen Falzroboter (8) erreichbar.

Wie Figur 2 verdeutlicht, ist das Falzbett (14) an einer Stützeinrichtung (18) angeordnet, die z.B. als mehrarmiger Träger oder Gestell ausgebildet ist, der den Roboterzugang nicht behindert. Das Falzbett (14) hat eine aufrechte Lage und ist vertikal oder schräg ausgerichtet. Dadurch sind die Vorder- und Rückseite (15,16) von Werkstück (3) und Falzbett (14) für ggf. beidseits angeordnete Falzroboter (8,9) zugänglich. Alternativ kann in einer nicht dargestellten Ausführungsform das Falzbett (14) eine liegende und im wesentlichen horizontale Lage haben, wobei die Falzroboter von oben und unten angreifen.

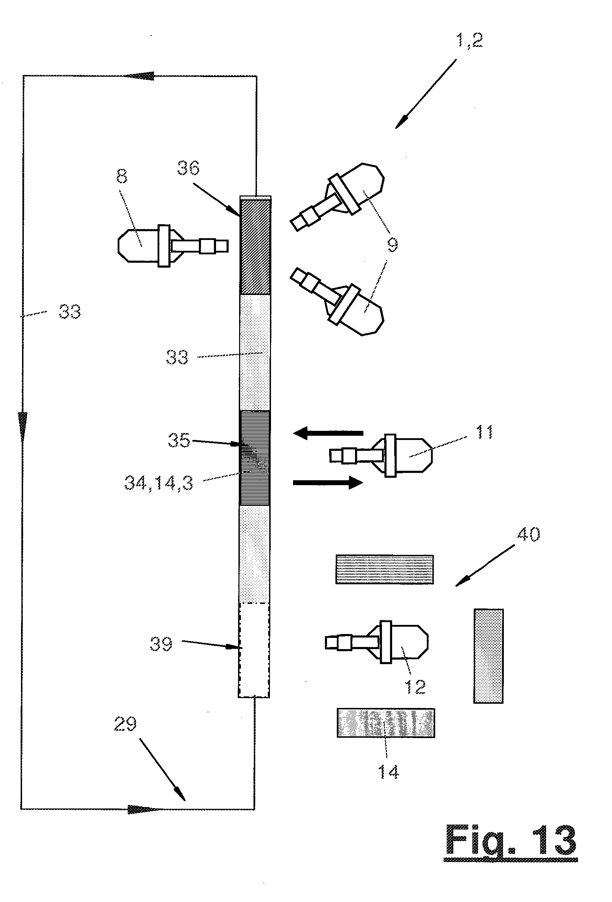

In der einfachsten Ausführungsform kann das Falzbett (14) stationär angeordnet sein und sich am Hallenboden oder an einer anderen geeigneten Stelle befinden. Die ggf. vorhandene Stützeinrichtung (18) kann dabei fest mit dem Untergrund verbunden sein. In der Ausführungsform von Figur 1 und 10 bis 13 ist das Falzbett (14) mit seiner Stützeinrichtung (18) auf einer Fördereinrichtung (29) angeordnet und kann bewegt werden. Es kann hierbei auf der Fördereinrichtung (29) starr oder lösbar angeordnet sein. Es kann sich insbesondere auf einer beweglichen Palette (34) befinden, wie sie in Figur 13 angedeutet ist.

Die Falzeinrichtung (2) weist mehrere Roboter (8,9,10,11,12) auf. Dies sind zum einen Falzroboter (8,9), die beidseits des Falzbetts (14) und des Werkstücks (3) an dessen Vorder- und Rückseite (15,16) angeordnet sind. Die Falzroboter (8,9) sind mit einem Falzwerkzeug (20) ausgestattet, welches insbesondere als Rollenfalzkopf (21,22) ausgebildet ist und vom jeweiligen Falzroboter (8,9) entlang des jeweiligen inneren und äußeren Falzes (5,6) bewegt wird. Die nachfolgend näher erläuterten Rollenfalzköpfe (21,22) können an die Falzbedingungen angepasst und in unterschiedlicher Weise ausgebildet sein.

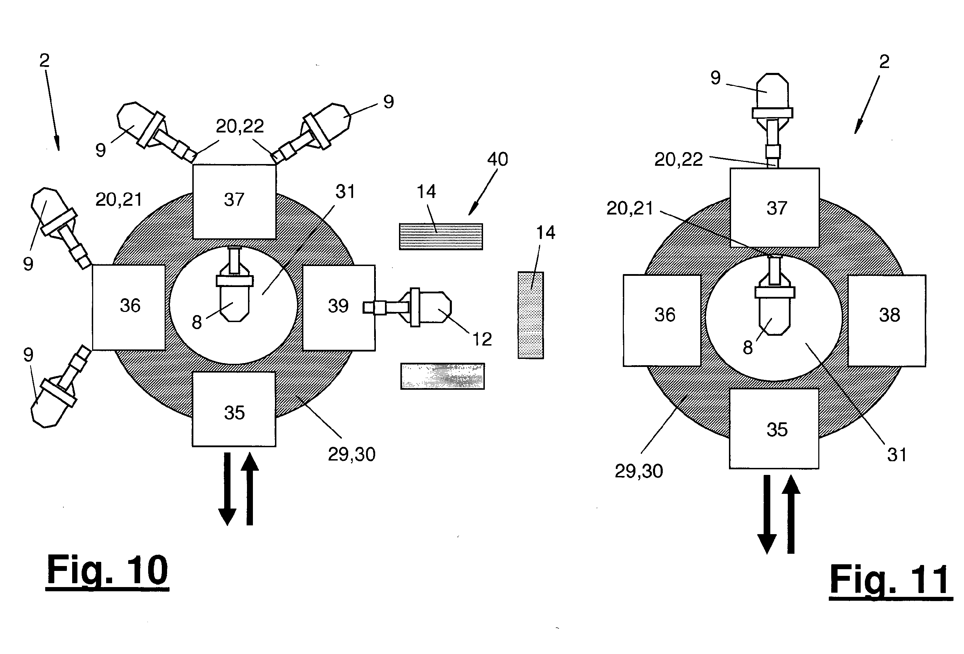

Die Falzeinrichtung (2) kann ferner einen Falzroboter (10) aufweisen, der z.B. in Figur 1 dargestellt ist und der zum Falzen von Knickstellen, Eckbereichen mit engem Radius oder dgl. anderen falzkritischen Stellen am Werkstück (3) vorgesehen ist. Ferner kann ein Roboter (11) zum Zuführen und Abführen der Werkstücke (3) bzw. zum Be- und Entladen des Falzbetts (14) eingesetzt werden. Figur 12 und 13 zeigen eine solche Anordnung. Alternativ kann eine andere geeignete Lade- oder Zuführvorrichtung eingesetzt werden. Schließlich kann die Falzeinrichtung (2) noch einen oder mehrere Handlingroboter (12) zum Bewegen eines transportablen Falzbetts (14) aufweisen, wie dies in Figur 10, 12 und 13 dargestellt ist und nachfolgend näher erläutert wird.

Die Fördereinrichtung (29) ist als Ringförderer ausgebildet. Ferner kann an der Fördereinrichtung (29) ein Magazin (40) für gleiche oder unterschiedliche Falzbetten (14) oder für Paletten (34) angeordnet sein.

Die Roboter (8,9,10,11,12) sind mehrachsig und können eine beliebige Kombination von rotatorischen und/oder translatorischen Achsen aufweisen. In der gezeigten Ausführungsform handelt es sich um sechsachsige Gelenkarmroboter mit einer mehrachsigen Roboterhand (13), an der die Falzwerkzeuge (20), insbesondere die Rollfalzköpfe (21,22), angeflanscht sind. Die Verbindung kann fest oder mittels einer Wechselkupplung (nicht dargestellt) lösbar sein. Die Roboter (8,9,10,11,12) können ggf. ihre Werkzeuge tauschen.

Die Roboter (8, 9, 10, 11, 12) sind in den gezeigten Ausführungsformen stationär angeordnet und bedienen eine mittels der Fördereinrichtung (29) bewegliche Falzbettanordnung. Sie können alternativ oder zusätzlich ihrerseits eine weitere Bewegungsachse, insbesondere eine Fahr- oder Schwingenachse, haben und können sich dadurch entlang eines z.B. stationären Falzbetts (14) oder einer Reihe von mehreren Falzbetten bewegen. Die Roboter (8 - 12) können stehen oder hängen.

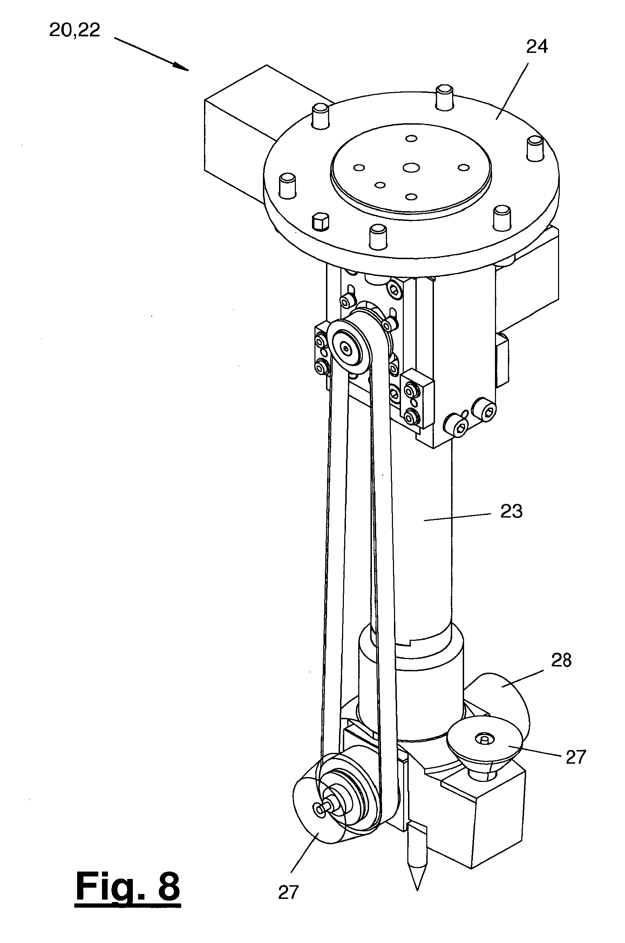

Die eingangs erwähnten Rollenfalzköpfe (21,22) können je nach Falzerfordernissen eine unterschiedliche Ausbildung haben. Figur 8 zeigt einen Rollenfalzkopf (22), der z.B. für den Außenfalz (6) eingesetzt wird. Er weist einen länglichen und z.B. zylindrischen Schaft (23) auf, an dessen einem Ende ein Roboteranschluss (24), z.B. ein Anschlussflansch, angeordnet ist. Am anderen Schaftende können eine oder mehrere drehbare Falzrollen (27,28) angeordnet sein.

Diese Falzrollen (27,28) können einen eigenen und in Figur 8 schematisch angedeuteten Antrieb haben, der die betreffende Falzrolle (27,28) drehend antreibt. Die Rollenumfangsgeschwindigkeit an der Kontaktstelle zum Flansch bzw. Falz (6) kann hierbei an die Führungsgeschwindigkeit des Roboters (9) angepasst sein, indem sie beispielsweise gleich groß und gleich gerichtet ist. Alternativ kann auf den Rollenantrieb verzichtet werden, wobei die betreffende Falzrolle (27,28) frei drehbar gelagert ist.

In Figur 8 weist der Rollenfalzkopf (22) drei Falzrollen (27,28) auf, die an verschiedenen Seiten des Schaftendes angeordnet sind, wobei sie eine unterschiedliche Formgebung, insbesondere Falzkontur, und eine variierende Ausrichtung haben. Die einen Falzrollen (27) können eine stellenweise kegelförmige Gestalt und ggf. einen Zylinderzapfen zum Vorfalzen aufweist. Die andere Falzrolle (28) zum Fertigfalzen kann einen im wesentlichen zylindrischen Mantel besitzt. Für andere Ausführungsbeispiele mit den anderen Falzausbildungen genügen ggf. zwei Falzrollen an gegenüberliegenden Seiten des Schaftendes. Die Zahl und Formgebung der Falzrollen (27,28) kann beliebig und in Anpassung an die jeweilige Werkstück- und Falzgeometrie variieren.

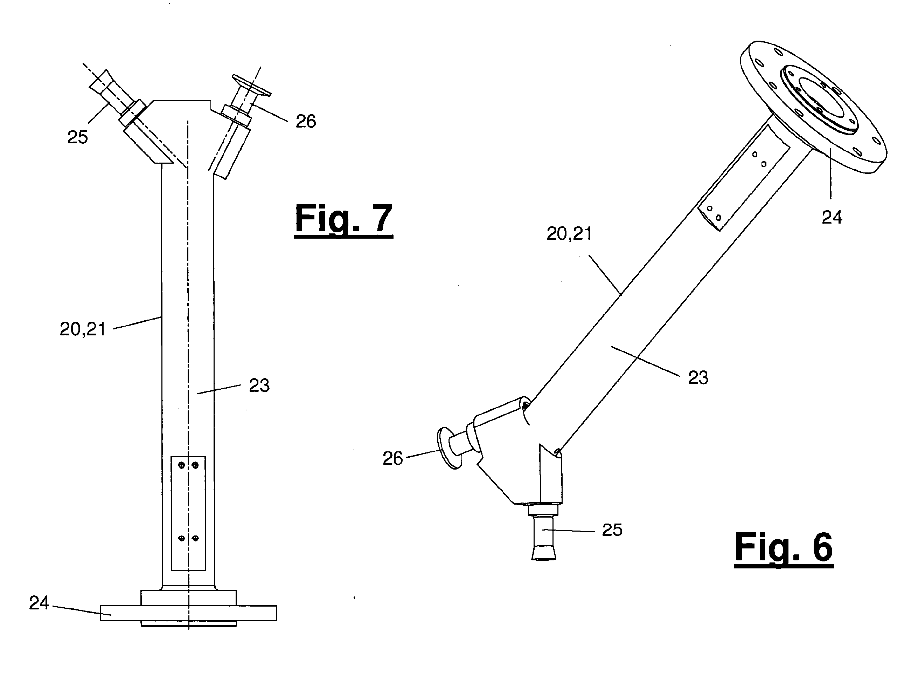

Figur 6 und 7 zeigen einen Rollenfalzkopf (21) für das Innenfalzen, der entsprechend der engeren Eckenradien und der beengten Platzverhältnisse eine schlankere Form hat. Er weist ebenfalls einen schlanken Schaft (23) mit einem Roboteranschluss (24) und zwei Falzrollen (25,26) am vorderen Schaftende auf, die hier jeweils eine schräge Ausrichtung haben. Sie besitzen jeweils einen zylindrischen Rollenschaft mit einem endseitigen Kegelteil, welches unterschiedliche Neigungswinkel hat. Figur 4 und 5 zeigen die Ausrichtung des Rollenfalzkopfes (21) und die Rollenzuordnung zum inneren Falz (5).

Figur 1 zeigt eine erste Variante der Falzeinrichtung (2) und ihrer Fördereinrichtung (29). Die Falzeinrichtung (2) kann hier zugleich eine Falzstation (1) bilden. In Abweichung der gezeigten Ausführungsform kann eine Falzstation (1) auch mehrere gleiche oder ähnliche Falzeinrichtungen (2) aufweisen.

Die Fördereinrichtung (29) ist erfindungsgemäß als Ringförderer (30), insbesondere als Drehtisch ausgebildet. Die Falzroboter (8,9) sind an gegenüberliegenden Seiten der Peripherie der Fördereinrichtung (29) angeordnet. Mehrere Falzroboter (9) für den äußeren Falz (6) sind an der Außenseite des Ringförderers oder Drehtisches (30) angeordnet. Im Zentrum und insbesondere in einem beispielsweise freigehaltenen Innenraum (31) befindet sich ein einzelner Falzroboter (8) für den inneren Falz (5).

Die Fördereinrichtung (29) bzw. der Ringförderer oder Drehtisch (30) weist mehrere Arbeitsstellen (35,36,37,38) auf, an denen sich jeweils ein Falzbett (14) befindet. Der Ringförderer oder Drehtisch (30) dreht sich um die zentrale vertikale Achse taktweise mittels eines gesteuerten Antriebs, wobei die Arbeitsstellen gewechselt werden. Auf dem Ringförderer oder Drehtisch (30) befinden sich z.B. vier Falzbetten (14) in gleichmäßiger Verteilung. Sie können eine gleiche oder unterschiedliche Ausbildung in Anpassung an die jeweilige Werkstückvorgabe haben. Die Falzbetten (14) können dabei fest montiert sein und werden bei der Tischdrehung mitgenommen. Sie sind mit ihren Vorderseiten (15) jeweils nach außen und mit ihrer Rückseite (16) zum Innenraum (31) gerichtet.

Eine Arbeitsstelle (35) ist als Ladestelle ausgebildet, an der die Werkstücke (3) zu- und abgeführt und an dem dortigen Falzbett (14) angebracht bzw. gelöst werden. Der Ringförderer bzw. Drehtisch (30) kann in der gezeigten Ausführungsform im Uhrzeigersinn drehen. Die nächste Arbeitsstelle (36) dient zum Falzen der Falze (5,6). An der Außenperipherie sind zwei Falzroboter (9) angeordnet, die gemeinsam die äußeren Falze (6) bearbeiten. Den inneren Falz (5) bearbeitet der zentrale Falzroboter (8) im Innenraum (31).

In Drehrichtung folgt eine zweite Arbeitsstelle (37) zum Falzen. Hier sind ebenfalls zwei äußere Falzroboter (9) angeordnet. Der zentrale Falzroboter (8) kann beide Arbeitsstellen (36,37) bedienen und dreht sich entsprechend. An der zweiten Falzstelle (37) werden die Rollenfalzvorgänge komplettiert.

Eine vierte Arbeitsstelle (38) kann ebenfalls zum Falzen dienen, wobei hier z.B. charakteristische Knickstellen, enge Eckbereiche oder dgl., gefalzt werden. Hier kann außenseitig der Falzroboter (10) angeordnet sein, der ein geeignetes Falzwerkzeug (20), z.B. einen Eckenformer oder dgl., aufweist.

In der Variante von Figur 10, die weitgehend mit Figur 1 übereinstimmt, hat die vierte Arbeitsstelle (39) eine andere Ausbildung. Sie dient einem Wechsel des Falzbetts (14). Hierfür ist außenseitig ein Handlingroboter (12) oder eine andere geeignete Einrichtung angeordnet, der mittels eines geeignetes Greifwerkzeuges Falzbetten (14) aus einem umgebenden Magazin (40) aufnimmt und an der Fördereinrichtung (29) wechselt.

In beiden Ausführungsformen von Figur 1 und 10 können die Falzbetten (14) gleich ausgebildet und für das gleiche Werkstück (3), z.B. die gezeigte Türe, vorgesehen sein. Diese Türe (3) wird mit entsprechender Kapazität gefalzt. Bei einem Werkstückwechsel können an der Arbeitsstelle (39) von Figur 10 die Falzbetten (14) entsprechend nacheinander ausgetauscht werden. In Abwandlung der gezeigten Ausführungsform können die Falzbetten (14) auf der Fördereinrichtung (29) unterschiedlich ausgebildet und für verschiedene Werkstücke (3), insbesondere Türen, vorgesehen sein. Dies erlaubt das Falzen von zwei, drei, vier oder mehr verschiedenen Werkstücken (3) in der gleichen Falzeinrichtung (2), wobei die Falzroboter (8,9,10) ggf. ihre Werkzeuge bedarfsgerecht wechseln. Auch bei dieser Variante kann eine Arbeitsstelle (39) für den Bettwechsel vorgesehen sein. Figur 12 zeigt z.B. vier verschiedene Seitentüren.

Figur 11 zeigt eine vereinfachte Falzeinrichtung (2), bei der der Ringförderer oder Drehtisch (30) wieder mehrere, z.B. vier Aufnahmen für Falzbetten (14), aufweist, wobei momentan aber nur zwei Arbeitsstellen (35) zum Laden und Entladen sowie (36) zum Falzen der Innen- und Außenfalze (5,6) bedient werden und mit Robotern (8,9) ausgerüstet sind.

Figur 12 zeigt eine nicht erfindungsgemäße Variante, in der die Fördereinrichtung (29) als Linearförderer mit einer reversierenden Förderbahn (32) ausgebildet ist. Hierbei können zwei Förderbahnen (32) parallel verlaufen und abwechselnd die Arbeitsstellen (35) zum Be- und Entladen, (36) zum Falzen der Falze (5,6) und (39) zum Falzbettwechsel bedienen. Diese Fördereinrichtung (29) kann z.B. als Flip Flop ausgebildet sein, bei dem auf jeder Förderbahn (32) zwei axial beabstandete Aufnahmen für jeweils ein Falzbett (14) längs beweglich angeordnet und angetrieben sind. Oberhalb der Arbeitsstelle (36) können in Abwandlung der gezeigten Ausführungsform eine oder beide Förderbahnen (32) eine Fortsetzung, z.B. eine Parkposition, aufweisen.

In der Variante von Figur 13 ist die Fördereinrichtung (29) als Ringförderer mit einer umlaufenden Förderbahn (33) ausgebildet, auf der z.B. die vorerwähnten Paletten (34) kreisen können. Auch hier gibt es eine Arbeitsstelle (35) zum Be- und Entladen, eine Arbeitsstelle (36) zum Falzen und eine Arbeitsstelle (39) für einen evtl. Wechsel der Falzbetten (14) und/oder der Paletten (34). Diese Arbeitsstellen (35,36,39) können an einem gebogenen oder linearen Förderabschnitt des Ringförderers angeordnet sein.

Auch in den Beispielen von Figur 12 und 13 sind die Falzroboter (8,9) beidseits der Förderbahn (32,33) und der Vorder- und Rückseite (15,16) von Falzbett (14) und Werkstück (3) angeordnet. Bei Figur 12 und 13 können ferner zusätzlichen Arbeitsstellen zum Falzen der Innen-und Außenfalze (5,6) sowie evtl. Ecken, charakteristischer Kanten oder dgl. vorhanden sein. In Abwandlung aller gezeigten Ausführungsbeispiele kann ferner an der Fördereinrichtung (29) die Zahl der Arbeitsstellen (35,36,37,38,39) und auch deren Anordnung variieren. Sie kann kleiner oder größer als in den gezeigten Ausführungsbeispielen sein.

Wie Figur 2 und 9 schematisch andeuten, kann die Falzeinrichtung (2) außer den Falzrobotern (8,9,10) im Bereich des Fensterausschnitts (7) eine Innenfalzeinrichtung (41) aufweisen, die am Falzbett (14) oder am Gestell (18) angeordnet ist und die entsprechende Falzwerkzeuge, z.B. schwenkbare Falzbacken nebst Antrieb zum einstufigen oder mehrstufigen Falzen von einem oder mehreren Flanschen am Rand des Fensterausschnitts (7) aufweist. Eine solche Innenfalzeinrichtung (41) kann z.B. entsprechend der WO 99/037419 A1 oder WO 99/037418 A1 ausgebildet sein. Die Innenfalzeinrichtung (41) kann alle Flansche am Fensterausschnitt (7) oder einen Teil davon falzen. Ein anderer Teil der Flansche kann von den Falzrobotern (8,9,10) in der vorbeschriebenen Art gefalzt werden.

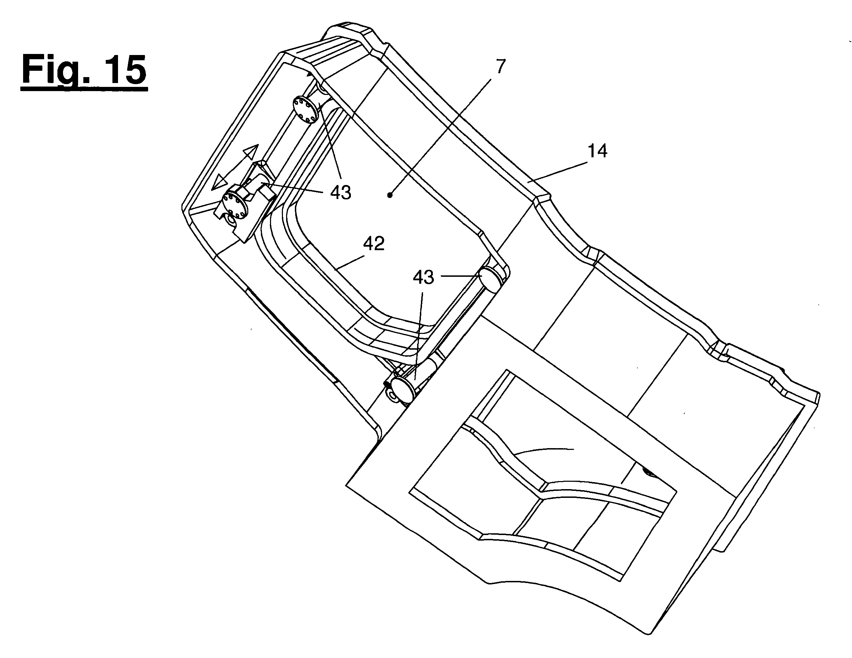

Ferner ist es in Abwandlung der vorbeschriebenen Ausführungsbeispiele möglich, ein Falzbett (14) mehrteilig und modular auszubilden. Das Falzbett (14) kann hierbei in mehrere Segmente unterteilt werden, die ggf. austauschbar an der Stützeinrichtung (18) angeordnet sind. Insbesondere kann im Bereich des Fensterausschnitts (7) ein Innenfalzbett (42) angeordnet sein, welches ein Teil oder ein Modul des Falzbettes (14) bildet. Figur 15 bis 18 zeigen eine solche Falzbettanordnung. Das Falzbett (14) kann zweiteilig ausgebildet sein und das besagte Innenfalzbett (42) sowie einen umgebenden äußeren Falzbettbereich aufweisen. Es kann darüber hinaus noch weiter modularisiert und segmentiert sein, was sowohl das Innenfalzbett (42), als auch die anderen Falzbettbereiche betreffen kann.

Gemäß Figur 15 bis 18 kann das einteilige oder mehrteilige Innenfalzbett (42) eine Stelleinrichtung (43) aufweisen, mit der es zwischen einer Arbeitsposition im Bereich des Fensterausschnitts (7) und einer Rückzugsposition, insbesondere einer abgesenkten Position, hin und her bewegt werden kann. Figur 17 zeigt die Arbeitsposition, in der das Werkstück (3), insbesondere eine in Figur 16 schematisch dargestellte Türe, am Rand des Fensterausschnitts (7) zu falzende Flansche aufweist. Dies ist z.B. der Fall, wenn eine Türe (3) eine bewegliche und mittels Fensterhebern verfahrbare oder schwenkbare Scheibe aufweist.

Andererseits kann es bei einer solchen bauartgleichen Türe (3) Bauvarianten geben, die sich hinsichtlich der Anforderungen an den Fensterausschnitt (7) bzw. den Fensterbereich unterscheiden. Wenn z.B. eine Glasscheibe fest im Fensterausschnitt (7) montiert wird oder eine Türe (3) auf einen durchbrochenen Fensterausschnitt (7) im Blech verzichtet, bedarf es keiner Falzvorgänge am Rand des Fensterausschnitts (7). In einem solchen Fall kann gemäß Figur 18 das Innenfalzbett (42) von der Stelleinrichtung (43) in eine Rückzugsposition gebracht und ggf. abgesenkt werden. Es bildet dadurch keine Störkontur für einen anders ausgebildeten Fensterrandbereich des Werkstücks (3). Dies gilt insbesondere, wenn gemäß Figur 18 in diesem Bereich ein durchgehendes Blech vorhanden ist.

Die Stelleinrichtung (43) besteht z.B. aus mehreren Hubmitteln mit geeigneten Antrieben, z.B. Hubzylindern, Kniehebeln oder dgl., an geeigneter Stelle, die z.B. an den Eckbereichen des Innenfalzbetts (42) angeordnet sind und die die beim Falzen auftretenden Kräfte aufnehmen und abstützen können.

Ein Innenfalzbett (42) und eine Stelleinrichtung (43) der vorgenannten Art können ggf. auch zusammen mit einer Innenfalzeinrichtung (41) der vorbeschriebenen Art kombiniert werden.

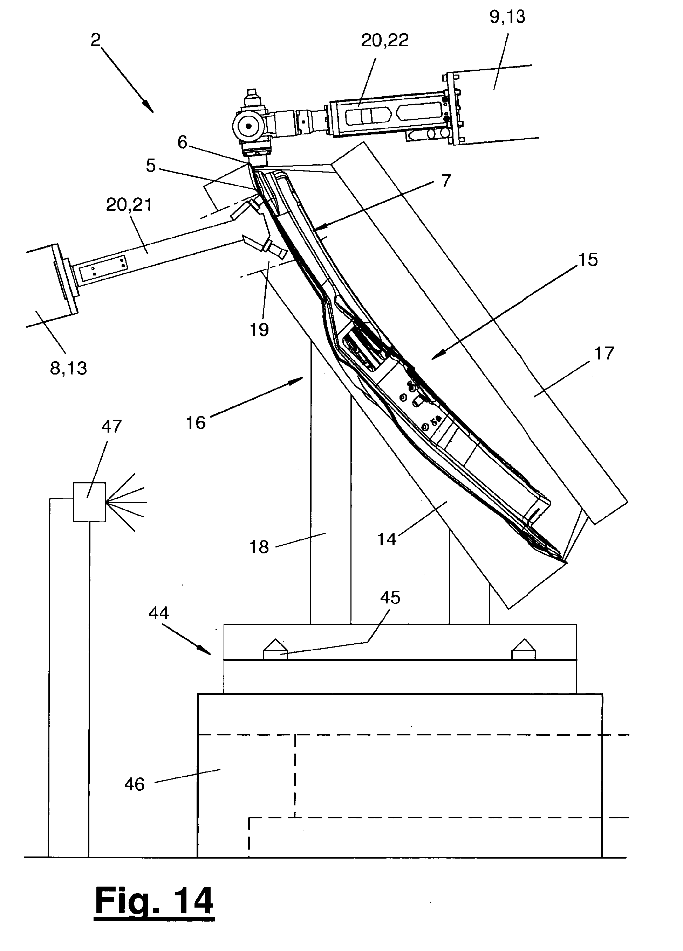

Figur 14 zeigt eine Variante der Falzbettanordnung. Die Stützeinrichtung (18) für das Falzbett (14) besitzt hierbei eine definierte Schnittstelle (44) zur exakten und reproduzierbaren Positionierung auf einem Unterbau (46). Dieser Unterbau kann z.B. ein stationärer Sockel oder ein mit Strichlinien angedeuteter Drehtisch sein.

Die Schnittstelle (44) sorgt für eine definierte, exakte und absolute Position der Stützeinrichtung (18) und des Falzbetts (14) sowie des darauf befindlichen Werkstücks (3) im Raum. Sie weist hierfür ein oder mehrere Positionierelemente (45) auf, die zwischen dem Unterbau (46) und der Stützeinrichtung (18) wirksam sind. Die Positionselemente (45) bestehen z.B. aus konischen Zapfen oder sog. Indexen am Unterbau (46), die in passende Aufnahmeöffnungen an einer Bodenplatte oder dgl. der Stützeinrichtung (18) greifen. Die Zuordnung kann auch umgekehrt sein. Alternativ können das oder die Positionierelemente (45) auch eine andere Ausbildung haben.

Wenn die Falzeinrichtung (2) mehrere gleiche oder unterschiedliche Falzbetten (14) und Stützeinrichtungen (18) aufweist, können diese allesamt die gleiche Schnittstellenausbildung haben.

Gemäß Figur 1 und 14 kann die Falzeinrichtung (1) eine Vermessungseinrichtung (47) aufweisen, welche einige oder alle relevanten Einrichtungskomponenten, insbesondere die Roboter (8,9,10,11,12), das Falzbett (14) mit einer evtl. Stelleinrichtung (43) und einer Spanneinrichtung (17), das oder die Falzwerkzeuge (20), eine evtl. vorhandene Fördereinrichtung (29) und eine evtl. vorhandene Schnittstelle (44) für austauschbare Stützeinrichtungen (18) erfassen kann. Die Vermessungseinrichtung (47) kann einteilig oder mehrteilig sein. Sie erfasst die exakte Position und Orientierung der vorgenannten Einrichtungskomponenten im Raum sowie deren gegenseitige Ausrichtung. Damit ist auch deren genaue Zuordnung zu einem ggf. gemeinsamen Bezugspunkt gegeben. Dies kann z.B. der Fußpunkt eines Basis-Koordinatensystems der Falzeinrichtung (2) oder der Falzstation (1) oder eines Werkstück-Koordinatensystems sein.

Die Roboter (8 - 12), insbesondere die Falzroboter (8,9,10), können mit absoluter Genauigkeit vermessen und kalibriert sein. Hierbei können evtl. Toleranzen und Belastungen, z.B. durch ein Falzwerkzeug (20), kompensiert sein. Durch die Kalibrierung ist eine exakte Kinematik der Roboter (8, 9, 10, 11, 12) gegeben.

Die Vermessungseinrichtung (47) kann in beliebig geeigneter Weise ausgebildet sein und funktionieren. Sie kann insbesondere die Einrichtungskomponenten optisch erfassen und vermessen. Dies kann in unterschiedlicher Weise geschehen, z.B. mit einer Laser-Messeinrichtung, insbesondere einem sog. Laser-Tracker. Alternativ kann eine Messkamera mit einem optischen Sensor und einer Bildauswertung oder dgl. andere Messtechnik eingesetzt werden. Auch andere taktile Messverfahren oder dgl sind möglich. Die Vermessungseinrichtung (47) kann einen oder ggf. mehrere verteilt angeordnete Messköpfe sowie eine Auswerteeinrichtung aufweisen.

Wie Figur 1 verdeutlicht, kann die Falzeinrichtung (2) oder die Falzstation (1) eine Steuerung (48) aufweisen, welche einige oder alle vorgenannten Komponenten (8,9,10,11,12,14,17,20,29,42,43) der Falzeinrichtung (2) und deren Antriebe steuert. Die Steuerung (48) kann eine eigenständige Steuerung sein. Sie kann alternativ in eine vorhandene Steuerung, z.B. in eine Robotersteuerung, integriert sein. Sie steht mit den vorgenannten Komponenten in einer Steuerverbindung per Leitung oder drahtlos (nicht dargestellt).

Die Steuerung (48) weist eine Recheneinheit mit mehreren Speichern und Schnittstellen zur Ein- und Ausgabe von Daten und Signalen auf. Sie hat außerdem ein Bearbeitungsprogramm gespeichert, welches auch eine von den Falzrobotern (8,9,10) zu verfolgende Bahn beim Falzprozess beinhaltet. Das Bearbeitungsprogramm ist auf eine exakt vermessene und kalibrierte Lage, Ausbildung und ggf. Kinematik der besagten Komponenten (8,9,10,11,12,14,17,20,29,42) sowie auch eine evtl. vorhandene Schnittstelle (44) der Falzeinrichtung (2) adaptiert. Das Bearbeitungsprogramm kennt insbesondere die Form und Abmessung der Falzwerkzeuge (20), insbesondere der Rollenfalzköpfe (21,22) und die auf den vorgenannten Bezugspunkt bezogene Lage der Tool-Center-Points der Falzwerkzeuge (20).

Die Steuerung (48) kann daher die besagten Komponenten (8,9,10,11,12,14,17,20,29,43) mit hoher Präzision steuern. Bei einer Änderung der Konfiguration der Falzeinrichtung (2), z.B. bei einem Wechsel eines Falzbetts (14) und einer Stützeinrichtung (18) werden die geänderten Komponenten vor Ort mit der Vermessungseinrichtung (17) neu eingemessen. Die Vermessungseinrichtung (47) steht mit der Steuerung (48) in Verbindung und übermittelt die Messergebnisse an die Steuerung (48), die daraus evtl. Positions- und ggf. Kinematikänderungen detektiert und das Bearbeitungsprogramm nach den Messergebnissen anpasst. Hierbei können die bei der Einmessung evtl. festgestellten Abweichungen in Position, Orientierung, Ausrichtung, Form und Abmessungen als Offset für die jeweilige Komponente in das Bearbeitungsprogramm übernommen werden. Das Bearbeitungsprogramm braucht ansonsten nicht geändert zu werden. Insbesondere ist es nicht erforderlich, die Falzeinrichtung (2) oder die gesamte Falzstation (1) erneut komplett einzurichten und ein neues Bearbeitungsprogramm zu erstellen.

Derartige Konfigurationsänderungen treten z.B. auf, wenn eine Pilot-Falzstation (1) für ein neues Werkstück (3), insbesondere ein Karosseriebauteil, parallel zu einer laufenden Fertigung und einer Fertigungslinie für ein anderes Werkstück (3) aufgebaut und eingerichtet wird und diese Falzstation (1) später beim Werkstückwechsel in die Fertigungslinie übernommen und integriert wird. Ein anderer Einsatzfall betrifft die Fertigung von Ersatzteilen und Werkstücken (3) nach Auslaufen einer Serienproduktion. Eine Falzstation (1) der gezeigten Art kann dann für die Fertigung unterschiedlicher Werkstücke (3) bzw. Karosseriebauteile benutzt und bei einem Werkstückwechsel in ihrer Konfiguration geändert werden. Hierfür ist die vorbeschriebene Schnittstelle (44) günstig. Auch der Wechsel eines Falzwerkzeugs (20) kann eine Konfigurationsänderung bedeuten.

Die in Figur 1 dargestellte Steuer- und Vermessungstechnik kann auch bei den anderen Ausführungsbeispielen gemäß Figur 10 bis 13 eingesetzt werden.

Die vorbeschriebenen Ausbildungen der Mess- und Steuertechnik sowie Programmadaption, insbesondere auch die Vermessungseinrichtung (47), die Schnittstelle (44) und die Steuerung (48) mit dem adaptionsfähigen Bearbeitungsprogramm haben eine eigenständige erfinderische Bedeutung und zwar einzeln für sich, als auch in Kombination. Gleiches gilt für das bewegliche Innenfalzbett (42) und dessen steuerbare Stelleinrichtung (43). Diese eigenständigen Erfindungen können auch bei konventionellen Falzeinrichtungen mit einseitigem Zugang und/oder einseitiger Falzbearbeitung eingesetzt werden.

Abwandlungen der gezeigten und beschriebenen Ausführungsformen sind in verschiedener Weise möglich. Zum einen können die Zahl der inneren und äußeren Falzroboter (8,9) gleich sein. Es müssen auch nicht an einer Falz-Arbeitsstelle beide Falzroboter (8,9) gemeinsam arbeiten, auch wenn dies aus Taktzeitgründen vorteilhaft ist. In den Arbeitsstellen (36,37) können die Falzvorgänge für den Innen- und Außenfalz (5,6) einzeln und nacheinander ausgeführt werden, wobei das Werkstück (3) am Falzbett (14) verbleibt. Schließlich kann die Zahl der jeweils an einer Arbeitsstelle (35,36,37,38,39) tätigen Roboter (8,9,10,11,12) variieren. Auch die Art und Ausbildung der Falzwerkzeuge (20,21,22) kann variieren. Die Rollenfalzköpfe (21,22) können z.B. je nach Art und Geometrie des Falzes (5,6) mehrere in Falzerstreckungsrichtung hintereinander angeordnete Falzrollen (25,26,27,28) aufweisen. Variabel ist ferner die Gestalt und Kinematik der Roboter (8,9,10,11,12). Auch die Art und Form des Werkstücks (3) und die hieran angepasste Formgebung des Falzbetts (14) kann variieren.

### BEZUGSZEICHENLISTE

- 1: Falzstation
- 2: Falzeinrichtung
- 3: Werkstück, Türe
- 4: Profil, Holm
- 5: Falz innen
- 6: Falz außen
- 7: Fensterausschnitt
- 8: Roboter, Falzroboter für innen
- 9: Roboter, Falzroboter für außen
- 10: Roboter, Falzroboter Ecken
- 11: Roboter, Handlingroboter, Laderoboter
- 12: Roboter, Handlingroboter für Falzbett
- 13: Roboterhand
- 14: Falzbett
- 15: Vorderseite
- 16: Rückseite
- 17: Spanneinrichtung
- 18: Stützeinrichtung, Träger
- 19: Ausschnitt
- 20: Falzwerkzeug
- 21: Rollenfalzkopf
- 22: Rollenfalzkopf
- 23: Schaft
- 24: Roboteranschluss, Flansch
- 25: Falzrolle
- 26: Falzrolle
- 27: Falzrolle
- 28: Falzrolle
- 29: Fördereinrichtung
- 30: Ringförderer, Drehtisch
- 31: Innenraum
- 32: Förderbahn, reversierend
- 33: Förderbahn, umlaufend
- 34: Palette
- 35: Arbeitsstelle, Laden/Entladen
- 36: Arbeitsstelle, Falzen
- 37: Arbeitsstelle, Falzen
- 38: Arbeitsstelle, Falzen
- 39: Arbeitsstelle, Bettwechsel
- 40: Magazin
- 41: Innenfalzeinrichtung
- 42: Innenfalzbett
- 43: Stelleinrichtung
- 44: Schnittstelle
- 45: Positionierelement
- 46: Unterbau, Sockel, Drehtisch
- 47: Vermessungseinrichtung
- 48: Steuerung

## Patentansprüche

1. Falzeinrichtung mit einem Falzbett (14) für ein Werkstück (3) und mehreren Falzrobotern (8,9) mit Falzwerkzeugen (20), wobei die Falzeinrichtung (2) zum beidseitigen Falzen von inneren und äußeren Falzen (5,6) am Werkstück (3) ausgebildet ist, wobei an verschiedenen Seiten, insbesondere an der Vorder-und Rückseite (15,16), des Falzbetts (14) Falzroboter (8,9) angeordnet sind und das Falzbett (14) für einen beidseitigen Zugang von Vorder- und Rückseite (15,16) zu inneren und äußeren Falzen (5,6) am Werkstück (3) ausgebildet und angeordnet ist, **dadurch gekennzeichnet, dass** an einer Fördereinrichtung (29) mehrere gleiche oder unterschiedliche Falzbetten (14) angeordnet sind, wobei die Fördereinrichtung (29) als Ringförderer (30), insbesondere als Drehtisch, ausgebildet ist und im Zentrum oder Innenraum (31) des Ringförderers (30) ein Falzroboter (8) angeordnet ist.

2. Falzeinrichtung Anspruch 1, **dadurch gekennzeichnet, dass** das Falzbett (14) einen Ausschnitt (19) für einen rückwärtigen Zugang zu einem inneren Falz (5) aufweist.

3. Falzeinrichtung nach Anspruch 1 oder 2, **dadurch gekennzeichnet, dass** das Falzbett (14) eine Bettung für innere und äußere Falze (5,6) und ein zumindest bereichsweise deaktivierbares, insbesondere absenkbares Innenfalzbett (42) aufweist.

4. Falzeinrichtung nach Anspruch 1, 2 oder 3, **dadurch gekennzeichnet, dass** das Falzbett (14) an einer Stützeinrichtung (18) stehend oder schräg angeordnet ist, wobei die Stützeinrichtung (18) mit dem Falzbett (14) auf der Fördereinrichtung (29) starr oder lösbar angeordnet ist.

5. Falzeinrichtung nach einem der vorhergehenden Ansprüche, **dadurch gekennzeichnet, dass** die Falzeinrichtung (2) eine Vermessungseinrichtung (47) aufweist.

6. Falzeinrichtung nach einem der vorhergehenden Ansprüche, **dadurch gekennzeichnet, dass** an einem Falzbett (14) im Bereich eines Fensterausschnitts (7) eines Werkstücks (3) eine Innenfalzeinrichtung (41) angeordnet ist.

7. Falzeinrichtung nach einem der vorhergehenden Ansprüche, **dadurch gekennzeichnet, dass** die Falzroboter (8,9) ein Falzwerkzeug (20), insbesondere einen Rollenfalzkopf (21,22) tragen.

8. Falzeinrichtung nach einem der vorhergehenden Ansprüche, **dadurch gekennzeichnet, dass** ein Falzwerkzeug (20) als Eckenformer ausgebildet ist.

9. Falzeinrichtung nach einem der vorhergehenden Ansprüche, **dadurch gekennzeichnet, dass** an der Fördereinrichtung (29) für Falzbetten (14) mehrere Arbeitsstellen (35,36,37,38,39) angeordnet sind.

10. Falzeinrichtung nach einem der vorhergehenden Ansprüche, **dadurch gekennzeichnet, dass** die Falzeinrichtung (2) eine Steuerung (48) mit einem Bearbeitungsprogramm aufweist, das auf eine exakt vermessene und kalibrierte Lage, Ausbildung und ggf. Kinematik von Komponenten (8,9,10,11,12,14,17,20,29,42,43,44) der Falzeinrichtung (2) adaptiert ist.

11. Verfahren zum Falzen von Werkstücken (3), wobei ein Werkstück (3) auf einem Falzbett (14) von mehreren Falzrobotern (8,9) mit Falzwerkzeugen (20) bearbeitet wird, wobei innere und äußere Falze (5,6) am Werkstück (3) von Falzrobotern (8,9) beidseitig gefalzt werden, die an verschiedenen Seiten, insbesondere an der Vorder- und Rückseite (15,16), des Falzbetts (14) angeordnet sind und die am Falzbett (14) einen beidseitigen Zugang zu inneren und äußeren Falzen (5,6) am Werkstück (3) haben, **dadurch gekennzeichnet, dass** an einer Fördereinrichtung (29) mehrere gleiche oder unterschiedliche Falzbetten (14) angeordnet werden, wobei die Fördereinrichtung (29) als Ringförderer (30), insbesondere als Drehtisch, ausgebildet ist und im Zentrum oder Innenraum (31) des Ringförderers (30) ein Falzroboter (8) angeordnet ist.

12. Verfahren nach Anspruch 11, **dadurch gekennzeichnet, dass** das Falzbett (14) von einem Roboter (11) mit Werkstücken (3) be- und entladen wird.

13. Verfahren nach Anspruch 11 oder 12, **dadurch gekennzeichnet, dass** ein transportables Falzbett (14) von einem Roboter (11) gehandhabt wird.

14. Verfahren nach einem der Ansprüche 11 bis 13, **dadurch gekennzeichnet, dass** die Roboter (8 - 12) mit absoluter Genauigkeit vermessen und kalibriert werden.

15. Verfahren nach einem der Ansprüche 11 bis 14, **dadurch gekennzeichnet, dass** die Falzeinrichtung (2) von einer Steuerung (48) mit einem Bearbeitungsprogramm gesteuert wird, das auf eine exakt vermessene und kalibrierte Lage, Ausbildung und ggf. Kinematik von Komponenten (8, 9, 10, 11, 12, 14, 17, 20, 29, 42, 44) der Falzeinrichtung (2) adaptiert ist und bei einer Änderung der Konfiguration der Falzeinrichtung (2) die Komponenten (8,9,10,11,12,14,17,20,29,42,44) der Falzeinrichtung (2) vor Ort mit einer Vermessungseinrichtung (47) eingemessen werden und das Bearbeitungsprogramm nach den Messergebnissen angepasst wird.

## Claims

1. Folding device having a folding bed (14) for a workpiece (3) and multiple folding robots (8, 9) with folding tools (20), the folding device (2) being designed for the two-sided folding of internal and external folds (5, 6) on the workpiece (3), folding robots (8, 9) being arranged on different sides of the folding bed (14), in particular on the front and rear side (15, 16), and the folding bed (14) being designed and arranged for two-sided access from the front and rear side (15, 16) to internal and external folds (5, 6) on the workpiece (3), **characterized in that** a plurality of identical or different folding beds (14) are arranged on a conveying device (29), the conveying device (29) being formed as a ring conveyor (30), in particular as a turntable, and a folding robot (8) being arranged in the centre or interior (31) of the ring conveyor (30).

2. Folding device according to Claim 1, **characterized in that** the folding bed (14) has a cut-out (19) for rear access to an internal fold (5).

3. Folding device according to Claim 1 or 2, **characterized in that** the folding bed (14) has bedding for internal and external folds (5, 6) and an internal folding bed (42) that can be deactivated, in particular lowered, at least in some areas.

4. Folding device according to Claim 1, 2 or 3, **characterized in that** the folding bed (14) is arranged upright or obliquely on a supporting device (18), the supporting device (18) with the folding bed (14) being arranged rigidly or detachably on the conveying device (29).

5. Folding device according to one of the preceding claims, **characterized in that** the folding device (2) has a measuring device (47).

6. Folding device according to one of the preceding claims, **characterized in that** an internal folding device (41) is arranged on a folding bed (14) in the area of a window cut-out (7) of a workpiece (3).

7. Folding device according to one of the preceding claims, **characterized in that** the folding robots (8, 9) carry a folding tool (20), in particular a roller folding head (21, 22).

8. Folding device according to one of the preceding claims, **characterized in that** a folding tool (20) is designed as a corner former.

9. Folding device according to one of the preceding claims, **characterized in that** a plurality of workplaces (35, 36, 37, 38, 39) are arranged on the conveying device (29) for folding beds (14).

10. Folding device according to one of the preceding claims, **characterized in that** the folding device (2) has a control system (48) with a processing program, which is adapted to an exactly measured and calibrated position, formation and, if appropriate, kinematics of components (8, 9, 10, 11, 12, 14, 17, 20, 29, 42, 43, 44) of the folding device (2).

11. Method for folding workpieces (3), a workpiece (3) being processed on a folding bed (14) by a plurality of folding robots (8, 9) with folding tools (20), internal and external folds (5, 6) on the workpiece (3) being folded on both sides by folding robots (8, 9), which are arranged on different sides of the folding bed (14), in particular on the front and rear side (15, 16), and which, on the folding bed (14), have two-sided access to internal and external folds (5, 6) on the workpiece (3), **characterized in that** a plurality of identical or different folding beds (14) are arranged on a conveying device (29), the conveying device (29) being formed as a ring conveyor (30), in particular as a turntable, and a folding robot (8) being arranged in the centre or interior (31) of the ring conveyor (30).

12. Method according to Claim 11, **characterized in that** the folding bed (14) is loaded and unloaded with workpieces (3) by a robot (11).

13. Method according to Claim 11 or 12, **characterized in that** a transportable folding bed (14) is handled by a robot (11).

14. Method according to one of Claims 11 to 13, **characterized in that** the robots (8 - 12) are measured and calibrated with absolute accuracy.

15. Method according to one of Claims 11 to 14, **characterized in that** the folding device (2) is controlled by a control system (48) having a processing program, which is adapted to an exactly measured and calibrated position, formation and, if appropriate, kinematics of components (8, 9, 10, 11, 12, 14, 17, 20, 29, 42, 44) of the folding device (2) and, in the event of a change in the configuration of the folding device (2), the components (8, 9, 10, 11, 12, 14, 17, 20, 29, 42, 44) of the folding device (2) are calibrated on site by a measuring device (47), and the processing program is adapted in accordance with the measured results.

## Revendications

1. Dispositif de pliage comprenant un lit de pliage (14) pour une pièce (3) et plusieurs robots de pliage (8, 9) avec des outils de pliage (20), le dispositif de pliage (2) étant réalisé pour effectuer un pliage des deux côtés de plis intérieurs et extérieurs (5, 6) sur la pièce (3), des robots de pliage (8, 9) étant disposés sur différents côtés, notamment sur le côté avant et le côté arrière (15, 16), du lit de pliage (14), et le lit de pliage (14) étant réalisé et disposé pour permettre un accès des deux côtés, du côté avant et du côté arrière (15, 16), à des plis intérieurs et extérieurs (5, 6) sur la pièce (3), **caractérisé en ce que** plusieurs lits de pliage identiques ou différents (14) sont disposés au niveau d'un dispositif de transport (29), le dispositif de transport (29) étant réalisé sous forme de convoyeur annulaire (30), en particulier sous forme de plateau tournant et un robot de pliage (8) étant disposé au centre ou dans l'espace intérieur (31) du convoyeur annulaire (30).

2. Dispositif de pliage selon la revendication 1, **caractérisé en ce que** le lit de pliage (14) présente une ouverture (19) pour un accès vers l'arrière à un pli intérieur (5).

3. Dispositif de pliage selon la revendication 1 ou 2, **caractérisé en ce que** le lit de pliage (14) présente un agencement de support pour des plis intérieurs et extérieurs (5, 6) et un lit de pliage intérieur (42) pouvant être désactivé au moins en partie, notamment pouvant être abaissé.

4. Dispositif de pliage selon la revendication 1, 2 ou 3, **caractérisé en ce que** le lit de pliage (14) est disposé verticalement ou obliquement au niveau d'un dispositif de support (18), le dispositif de support (18) étant disposé avec le lit de pliage (14) rigidement ou de manière détachable sur le dispositif de transport (29).

5. Dispositif de pliage selon l'une quelconque des revendications précédentes, **caractérisé en ce que** le dispositif de pliage (2) présente un dispositif de mesure (47).

6. Dispositif de pliage selon l'une quelconque des revendications précédentes, **caractérisé en ce qu'**un dispositif de pliage intérieur (41) est disposé au niveau d'un lit de pliage (14) dans la région d'une ouverture de fenêtre (7) d'une pièce (3) .

7. Dispositif de pliage selon l'une quelconque des revendications précédentes, **caractérisé en ce que** les robots de pliage (8, 9) portent un outil de pliage (20), en particulier une tête de pliage à rouleaux (21, 22).

8. Dispositif de pliage selon l'une quelconque des revendications précédentes, **caractérisé en ce qu'**un outil de pliage (20) est réalisé sous forme de formeur de coin.

9. Dispositif de pliage selon l'une quelconque des revendications précédentes, **caractérisé en ce que** plusieurs zones de travail (35, 36, 37, 38, 39) sont disposées au niveau du dispositif de transport (29) pour des lits de pliage (14).

10. Dispositif de pliage selon l'une quelconque des revendications précédentes, **caractérisé en ce que** le dispositif de pliage (2) présente une commande (48) avec un programme de traitement, qui est adapté à une position, une réalisation et éventuellement une cinématique, mesurées et calibrées exactement, de composants (8, 9, 10, 11, 12, 14, 17, 20, 29, 42, 43, 44) du dispositif de pliage (2).

11. Procédé de pliage de pièces (3), dans lequel une pièce (3) est traitée sur un lit de pliage (14) par plusieurs robots de pliage (8, 9) avec des outils de pliage (20), des plis intérieurs et extérieurs (5, 6) étant pliés des deux côtés sur la pièce (3) par des robots de pliage (8, 9), lesquels sont disposés sur différents côtés, notamment sur le côté avant et le côté arrière (15, 16), du lit de pliage (14) et présentent, au niveau du lit de pliage (14), un accès des deux côtés à des plis intérieurs et extérieurs (5, 6) sur la pièce (3), **caractérisé en ce que** plusieurs lits de pliage identiques ou différents (14) sont disposés au niveau d'un dispositif de transport (29), le dispositif de transport (29) étant réalisé sous forme de convoyeur annulaire (30), en particulier sous forme de plateau tournant et un robot de pliage (8) étant disposé au centre ou dans l'espace intérieur (31) du convoyeur annulaire (30).

12. Procédé selon la revendication 11, **caractérisé en ce que** le lit de pliage (14) est chargé et déchargé de pièces (3) par un robot (11).

13. Procédé selon la revendication 11 ou 12, **caractérisé en ce qu'**un lit de pliage transportable (14) est manipulé par un robot (11).

14. Procédé selon l'une quelconque des revendications 11 à 13, **caractérisé en ce que** les robots (8-12) sont mesurés et calibrés avec une précision absolue.

15. Procédé selon l'une quelconque des revendications 11 à 14, **caractérisé en ce que** le dispositif de pliage (2) est commandé par une commande (48) avec un programme de traitement qui est adapté à une position, une réalisation et éventuellement une cinématique, mesurées et calibrées exactement, de composants (8, 9, 10, 11, 12, 14, 17, 20, 29, 42, 44) du dispositif de pliage (2) et dans le cas d'une modification de la configuration du dispositif de pliage (2), les composants (8, 9, 10, 11, 12, 14, 17, 20, 29, 42, 44) du dispositif de pliage (2) sont mesurés sur place avec un dispositif de mesure (47) et le programme de traitement est adapté en fonction des résultats de la mesure.
